# EUROPEAN PATENT APPLICATION

(11) **EP 1 439 540 A1**
(43) Date of publication of application: **21.07.2004**
(21) Application number: 04000438.4
(22) Date of filing: 12.01.2004
(51) Int. Cl.: G11B 27/10, G11B 21/08

(54) **Reproduction apparatus**

(30) Priority: 17.01.2003 JP 2003009109
(71) Applicant: Orion Electric Company, Ltd., Takefu-shi, Fukui-ken (JP)
(72) Inventor: Tsurusaki, Tetsuo, Fukui-ken (JP); Mizushima, Yoshinori, Fukui-ken (JP)
(74) Representative: Kirschner, Klaus Dieter, Dipl.-Phys.

(57) **Abstract**

This invention enables moving whichever position of a file recorded on a recording medium to a designated position by simple operation and starting reproduction. The number of times of operation of a rapid traverse key or a rapid return key input in a reproduction stop state are counted. Time is designated according to this number of times of operation. If the present position in the reproduction stop state is moved forward or backward by as much as the designated time and a position corresponding to the designated time is detected, the reproduction is started.

## Description

The present invention relates to a reproduction apparatus which reproduces data such as a video or a music recorded on a recording medium.

### Description of the Related Art

A reproduction apparatus that reproduces data on a video or a music recorded on a randomly accessible recording medium such as a DVD or a hard disk sometimes reproduces the data while performing a rapid traverse or rapid return operation and searching a desired scene. If the reproduction apparatus hits the desired scene, the apparatus stops the rapid traverse or rapid return operation and starts reproducing the data at a position of the desired scene. These operations are performed by user's operation.

Patent Documents disclose techniques for simply executing these operations. According to Japanese Patent Application Publication Laid-Open No. 10-144060 (paragraphs 0012, 0017, and 0023), if a numeric key and a rapid traverse key are doubly depressed, the reproduction apparatus reproduces data at a position moved for predetermined time and sequentially repeats the data. If time is designated, the apparatus reproduces the data at a position after the designated time from the start of the data. According to Japanese Patent Application Publication Laid-Open No. 8-180648 (paragraph 0034), time at which a key is depressed is measured and a reproduction position according to this measured time can be searched. According to Japanese Patent Application Publication Laid-Open No. 2002-74912 (paragraphs 0017 and 0018), reproduction start time and reproduction end time are input and data corresponding to an interval between the reproduction start time and the reproduction end time is reproduced.

According to the conventional art, complicated operations such as the doubly depression of the keys or the input of the time which takes lots of time are required. In addition, if the desired scene is searched during reproduction but the time of the scene is unknown, the desired scene is not always, surely searched even by designating time.

It is an object of the present invention to provide a reproduction apparatus capable of reproducing data in a neighborhood of a desired scene by simple operation even if the desired scene cannot be accurately searched in such a case that the time of the desired scene is unknown.

According to one aspect of the present invention, there is provided a reproduction apparatus comprising: reproduction means for reproducing data recorded on a recording medium; input means for designating time; and control means for controlling said reproduction means to start reproducing the data at a position moved by as much as the designated time based on time information on a present position.

By so constituting the reproduction apparatus, if a position before or after a present position at which reproduction is performed is designated, the reproduction is started after the present position is moved to the designated position. The position at which the reproduction is to be started is a position corresponding to time obtained by adding or subtracting the input time to or from the time corresponding to the present position at which the reproduction is stopped. Therefore, even if the precise position of the desired scene is unknown, the data can be reproduced in the neighborhood of the desired position by inputting roughly guessed time.

The existing rapid traverse key or rapid return key is used when the time is input. If the key is operated a plurality of times, the reproduction is executed. The time is designated according to the number of times of operation. Alternatively, the time may be designated according to time for continuous operation. However, if the time is designated according to the number of times of operation, it is easy to sensibly understand how much time is designated. Therefore, the designation of the time according to the number of times of operation is preferable as input means.

Advantageous embodiments of the invention are now described with reference to the drawings in which:
Fig. 1 is a schematic block diagram of a reproduction apparatus in one embodiment of the present invention;
Fig. 2 is a flow chart for executing simple reproduction;
Fig. 3 illustrates an example of moving a reproduction position for the simple reproduction;
Fig. 4 is a flow chart for executing simple reproduction in another embodiment of the present invention; and
Fig. 5 illustrates an example of moving a reproduction position for the simple reproduction.

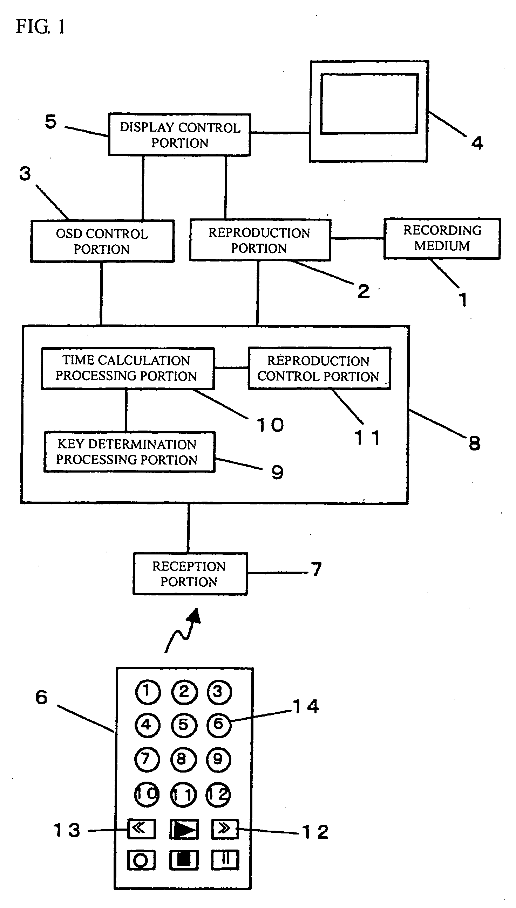

Fig. 1 illustrates a reproduction apparatus in one embodiment of the present invention. The reproduction apparatus includes a reproduction portion 2 that reads data recorded on a randomly accessible recording medium 1 such as a hard disk or a DVD and that performs a video processing such as data expansion, an on-screen display (OSD) control portion 3 that generates a video signal for on-screen display, a display control portion 5 that performs a signal processing so that the video signal output from the reproduction portion 2 and the OSD control portion 3 can be displayed on a display device 4 such as a monitor or a television screen, an input portion that consists of a remote controller 6 and a reception portion 7 for the remote controller 6, and a control portion 8 that consists of a microcomputer controlling the respective constituent elements of the apparatus so as to reproduce a video based on an input signal from the input portion.

The data is recorded on the recording medium 1 at time series to thereby form one file. Navigation information corresponding to this file is also recorded on the recording medium 1. The navigation information includes position information that indicates a recording position from the first data to the last data. This position information corresponds to reproduction time for one file. Namely, by converting the position information to time information, the reproduction position can be specified based on the time.

The control portion 8 has a simple reproduction function of moving a present position to a designated position and reproducing the data at the designated position as one special reproduction for reproducing the data at a different speed from that of ordinary reproduction such as rapid traverse reproduction (CUE), rapid return reproduction (REV), slow reproduction (SLOW) or frame skip (SKIP). To this end, the control portion 8 includes a key determination processing portion 9 that determines whether there is a simple reproduction command from the remote controller 6, a time calculation processing portion 10 that calculates a position corresponding to the designated time based on the input signal from the remote controller 6, and a reproduction control portion 11 that controls the reproduction portion 2 to start reproduction by moving a present position to a designated position.

The key determination processing portion 9 determines that there is a simple reproduction command if a specific key on the remote controller 6 is operated differently from ordinarily operated. Namely, the simple reproduction is started when either a rapid traverse key 12 or a rapid return key 13 is operated a plurality of times. If the key 12 or 13 is operated once, a normal rapid traverse or rapid return operation is performed. Time is designated based on the number of times of operation. That is, certain time is added to time per operation. This certain time can be arbitrarily set. The time calculation processing portion 10 counts the number of times of operation, calculates the designated time, and calculates the position moved by as much as the designated time from the time corresponding to the present position. The reproduction control portion 11 controls the reproduction portion 2 to read the data from the designated position and start reproducing the data at the designated position.

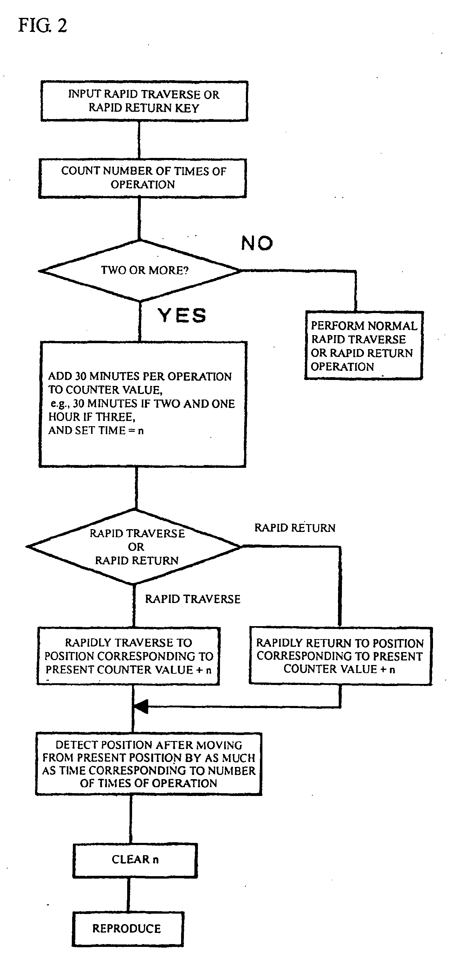

Steps of procedures for executing the simple reproduction will be described with reference to Fig. 2. If the rapid traverse key 12 or the rapid return key 13 is operated in a reproduction stop state, the times of operating the key 12 or 13 is counted. If the number of times of operation is two or more, it is determined that there is a simple reproduction command. If 30 minutes is added to the present counter value per operation, for example, if the number of times of operation is two, 30 minutes is added to the present counter value and if the number of times of operation is three, one hour is added to the present counter value to thereby determine the designated time n and the determined designated time n is temporarily stored in a memory.

If the rapid traverse key 12 is operated, a position corresponding to a counter value obtained by adding n to a present counter value is the designated position. If the designated time is, for example, 30 minutes and the present counter value is 1h45m55s, the designated counter value is 2h15m55s. If the rapid return key 13 is operated, a position corresponding to a counter value obtained by subtracting n from the present counter value is the designated position. If the designated time is, for example, 30 minutes and the present counter value is 1h45m55s, the designated counter value is 1h15m55s.

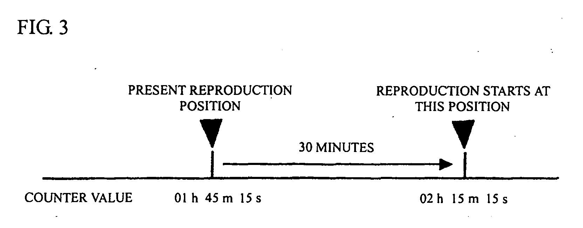

The data recorded on the recording medium 1 is searched based on the position information corresponding to this designated counter value and the position at which reproduction is started is detected. Thereafter, the designated time n stored in the memory is cleared and, as shown in Fig. 3, the reproduction is started at the position rapidly traversed by as much as 30 minutes from the present reproduction position.

If the rapid traverse key 12 or the rapid return key 13 is operated a plurality of times during the reproduction, a rapid traverse reproduction speed or a rapid reverse reproduction speed can be changed.

By thus designating the time, the reproduction can be started at the rapidly traversed or rapidly returned position. Due to this, even if the position of the desired scene is unknown, the desired scene can be searched by simple operation as long as the desired position can be roughly grasped. For example, on the recording medium 1 on which one-hour programs are continuously recorded, a plurality of programs are recorded as one file. Due to this, each program cannot be searched. In this case, by designating the time corresponding to the last position of the file, a desired program can be simply reproduced from the start.

In another embodiment, time is directly input and a position at which reproduction is started is designated. Namely, by operating numeric keys 14 continuous to the operation of a specific key, the present position is moved to the designated position based on the input time and simple reproduction is executed. The key determination processing portion 9 operates the rapid traverse key 12 or the rapid return key 13 on the remote controller 6, detects whether there is an input from the numeric keys 14 within predetermined time, and determines that a simple reproduction command is input if there is an input. Following the operation of the rapid traverse key 12 or the rapid return key 13, if there is no input from the numeric keys 14 within the predetermined time, the normal rapid traverse operation or rapid return operation is performed. The numeric value input by the numeric keys 14 is determined as the designated time. The time calculation processing portion 10 calculates a position moved by as much as the designated time from the time corresponding to the present position. The reproduction control portion 11 controls the reproduction portion 2 to read the data from the designated position and start reproducing the data at the designated position.

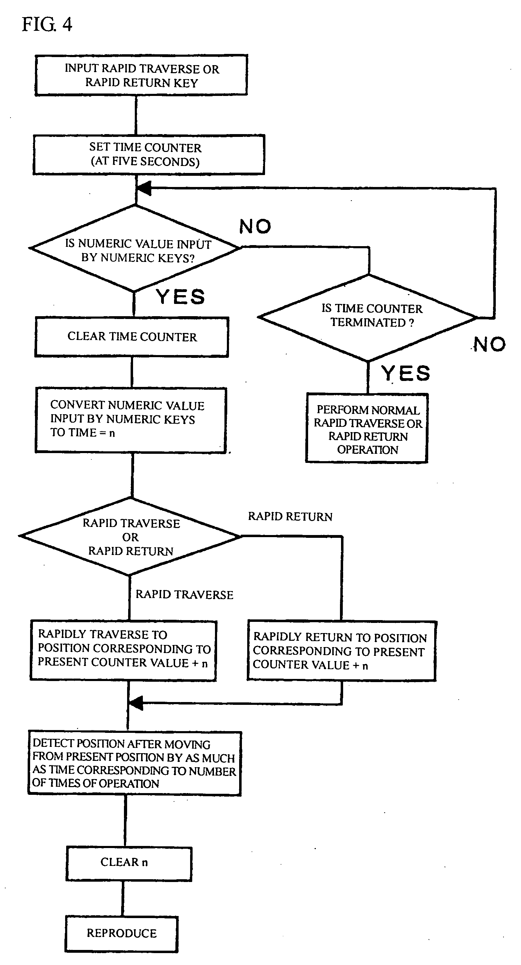

Steps of procedures for this simple reproduction will be described with reference to Fig. 4. If the rapid traverse key 12 or the rapid return key 13 is operated in the reproduction stop state, a time counter is set at predetermined time, e.g., five seconds. It is then detected whether there is an input by the numeric keys 14. If there is no input within the predetermined time, the normal rapid traverse or rapid return operation is performed. If there is an input within the predetermined time, it is determined that there is a simple reproduction command and the time counter is cleared. The input numeric value is determined as the designated time n and temporarily stored in the memory.

If the rapid traverse key 12 is operated, the position corresponding to the counter value obtained by adding n to the present counter value is the designated position. If the rapid return key 13 is operated, the position corresponding to the counter value obtained by subtracting n from the present counter value is the designated position.

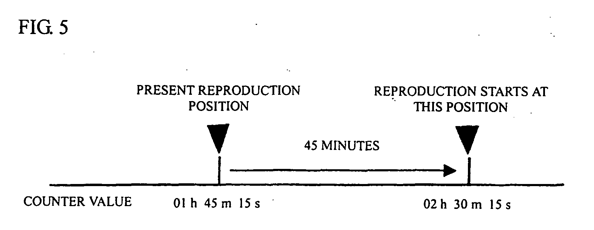

Based on the position information corresponding to this counter value, the data recorded on the recording medium 1 is searched and a position at which reproduction is started is detected. Thereafter, the counter value n stored in the memory is cleared and, as shown in Fig. 5, the reproduction is started at the position corresponding to the designated time from the present reproduction position, e.g., the position rapidly traversed from the present position by as much as 45 minutes.

As can be seen, by directly designating the time, the reproduction can be started at the rapidly traversed or rapidly reversed position. Therefore, reproduction can be quickly started at the desired scene by simple operation.

Needless to say, the present invention is not limited to the embodiments stated above and many changes and modifications can be made to the embodiments within the scope of the present invention. The reproduction apparatus may include a recording function. The recording medium may be an MD, a CD, a semiconductor memory, or a magnetic tape. The position information recorded on the magnetic tape uses the counter value included in a control signal recorded thereon as well as the video signal. If the magnetic tape is subjected to simple reproduction, the data is rapidly traversed or rapidly returned by as much as the designated time. Therefore, the data can be freely reproduced from the desired position irrespective of a program search signal. Likewise, if the recording medium is the DVD or the hard disk, the data can be freely reproduced irrespective of a chapter signal.

As is obvious from the above description, according to the present invention, data reproduction at the position moved from the present position by as much as the designated time can be performed by simple operation. Accordingly, even if the precise position of the desired scene is unknown, the data in the neighborhood of the desired scene can be reproduced by designating the roughly guessed position. Therefore, it is unnecessary to take lots of time for search.

Furthermore, by employing the existing keys such as the rapid traverse key and the rapid return key and using the position information recorded on the recording medium, the function of the simple reproduction can be added to the reproduction apparatus and the operativity of the reproduction apparatus can be thereby enhanced without increasing cost.

## Claims

1. A reproduction apparatus comprising:
reproduction means for reproducing data recorded on a recording medium;
input means for designating time; and
control means for controlling the reproduction means to start reproducing the data at a position moved by as much as the designated time based on time information on a present position.

2. The reproduction apparatus according to claim 1, wherein
the input means uses one of a rapid traverse key and a rapid return key, and designates the time based on the times of operating one of the rapid traverse key and the rapid return key.
